# EUROPEAN PATENT APPLICATION

(11) **EP 4 670 515 A1**
(43) Date of publication of application: **31.12.2025**
(21) Application number: 24382683.1
(22) Date of filing: 25.06.2024
(51) Int. Cl.: A23N 12/00, A23N 12/02

(54) **A METHOD AND AN APPARATUS FOR CLEANING FRUITS**

(71) Applicant: Skals Machinery A/S, 7100 Vejle (DK)
(72) Inventor: HIDALGO SIGNES, Salvador, 46270 Camí vell de La Pobla Llarga, 18. Castelló (ES)
(74) Representative: Inspicos P/S

(57) **Abstract**

A method and an apparatus (6) for cleaning and/or polishing fruits (31), wherein rotating brushes (2) form a trough-shaped channel (1). The fruit passes through the trough-shaped channel and comes into contact with the rotating brushes. When a desired layer thickness of fruits is provided in the channel, the weight of the upper fruits create a desired force of the lowest fruits towards the brushes for suitable cleaning. Moreover, the trough-shaped channel is further rotated about an approximately central axis whereby the rotation of the channel is counter to the rotation of the individual brushes. The rotation of both channel and individual brushes increases the contact the fruit has with the brushes and thus improves the cleaning of the fruit.

## Description

### FIELD OF THE INVENTION

The present invention relates to a method of cleaning and/or polishing fruits within the food industry.

### BACKGROUND OF THE INVENTION

Apparatus and methods of use thereof exist for the cleaning of dirt and/or soil residue from harvested root vegetables such as carrots, potatoes, parsnips or the like (as seen in WO 2016/053117 A1). US5780088 A, US430034 A, US3946658 A and US5285548 A have also been identified as relevant prior art.

it has surprisingly been found that a similar product may be used for cleaning and/or polishing citrus fruit even though most fruit is more fragile than e.g. potatoes.

### SUMMARY OF THE INVENTION

So, in a first aspect, the present invention relates to a method according to claim 1.

In this context, cleaning refers to the act of removing dirt or other undesirable substances such as fly excrement from a fruit.

In this context the term cleaning may also refer to the act of polishing the fruit, i.e., making the surface of the fruit smoother and more shiny by rubbing it.

In this context, citrus fruits may refer to fruits grown on trees or bushes, e.g., above ground. Example citrus fruits include lemon, lime, orange, grapefruit, yuzu, citron or the like.

A trough-shaped channel comprises one or more rotating brushes. The rotating brushes are preferably positioned so as to support the fruit from below when in the channel. Clearly, also other elements such as guides, which may or may not be stationary, may also assist in supporting the fruits in the channel. The guides may take the form of shelves, sheets or linkages and may be formed of any material such as metal, plastic, wood, or the like. The distance between the rotational brushes and/or guides is preferably smaller than the average size of the fruit so that the fruit cannot pass between these and exit the channel in that manner. The distance between these elements may allow liquid, dirt or other undesirable substances to leave the channel, whilst the fruit is maintained within the channel.

Thus, the shape and position of the surface of the brushes and/or other supporting element defines the overall shape of the trough-shaped channel. Therefore, even though the fruits are not supported by an unbroken surface, the shape of that surface in a cross section in a plane perpendicular to the first direction may be explained by geometric shapes.

A trough-shaped channel refers to a shape, wherein the bottom of the cross section is approximately concave such that it has the ability to support, from below, one or more pieces of fruit and also comprises sides to avoid the fruit rolling, being pushed out of, or otherwise exiting the channel sideways. Therefore, the bottom on the cross section may be U or V shaped. The bottom of the cross section may be a semi-circle, a square u shape, a half hexagon, a half pentagon or the like. The top of the channel cross section may be open, alternatively the top of the channel may, in the top of the cross section, have any shape such as flat, or mimic the bottom on the channel cross section, e.g, an upside-down V or U shape. In a preferred embodiment, the cross section is more or less circular so that all brushes may have rotational axes moving along the circle circumference so that the fruit, in addition to the rotation of the brushes around their rotational axes also experience a rotation of the brushes around a centre of the circle.

The cross section of the channel may vary along the first direction or it may be the same.

In this context, the occlusion element is an element configured to restrict movement of a percentage of the fruit in the first direction, so that layers of the fruit are formed within the channel, when a sufficient amount of fruit has been introduced into the channel. In other words, the occlusion element restricts the movement of the fruit in the first direction, such as out of the second end of the channel, so that the fruit piles on top of each other, whereby the fruit in the upper layers are substantially supported by fruit in the lower layers.

The occlusion element may block one or more lower layers of the fruit from exiting the channel. Then, fruit will have to build up until a higher layer thickness is seen, the upper layer(s) of which are then able to escape the channel.

Then, the channel may comprise a mechanism to shift fruit between layers, such as if the rotational axes of the brushes themselves are displaced, such as rotated around an axis or moved, unidirectionally or back and forth, along a curve, such as a closed curve, defined in a plane perpendicular to the first direction.

A fruit layer thickness of at least 2 is advantageous because fruit in the upper layers may provide an additional force on the fruit in the bottom layer and toward the brushes. In other words, fruit in the upper layers may press or push down on the fruit in the bottom layer. Therefore, the contacting force the bottom layer of the fruit has with the brushes may be greater and the fruit may be cleaned more vigorously. Naturally the number of layers and/or the mean height of the fruit may be used for controlling the cleaning of the fruit. Thus, the fruit height may be 2.5-3.5, 2.5-10.5, 2.5-7.5, 2.5-5.5, 3.5-10.5, 3.5-7.5, 3.5-5.5, 4.5-10.5, 4.5-7.5, 4.5-5.5, or the like.

It is noted that the first direction need not be horizontal so that the resulting force on the fruit need not be completely perpendicular to a rotation axis of a brush. In addition, if the rotation axes of the brushes themselves rotate, a centrifugal force is added to the force created by the weight of the upper layers of fruit. In addition, unevenness of the surface generated by the brushes and spaces between them and the rotation of both this surface in general and the brushes may cause the fruit to build up along a lower portion of a side of the channel. This increases the fruit height.

In this context, the occlusion element may be a plate, grate, bar or fence that spans at least part of the lower cross-sectional area of the channel. The occlusion element preferably is located at the second end of the channel. The occlusion element may be located flush with the second end, but outside of the channel. The occlusion element may be 5mm, 10mm, 15mm, 20mm, 30mm, 50mm, 60mm, or the like, thick in the first direction. The occlusion element may be located within the channel. The occlusion element may, when projected on to a plane perpendicular to the first direction, cover the lower 75%, 60%, 50%, 40%, 30%, 20%, 10%, or the like, of the cross-sectional area of the channel. The shape of the occlusion element may be a semi-circle, a quarter circle, a rectangle, a square, a triangle, a circle or the like.

The occlusion element may be angled with respect to the horizontal so that it may additionally or alternatively occlude the upper cross-sectional area of the channel or the lower layers in a channel formed by brushes the rotational axes of which are rotated around an axis.

The occlusion element may relate to a portion of the channel that has a smaller cross-sectional area than the first end of the channel. Thus, the occlusion element may be positioned between the first and the second ends. The occlusion element may be nominally ring shaped, such that the overall cross-section of the channel is reduced, but there is still an opening for the fruit to pass through the channel.

In this context, the fruit height is the distance between the surface of a rotating brush and the top of the fruit in the top layer, measured along the axis formed by the resultant force acting on the fruit. If the channel does not rotate itself, the axis formed by the resultant force is the vertical axis. The fruit height may be between 1 and 5 times a mean diameter or size of the fruit.

It may also be desirable to be able to alter the amount of cross-sectional area occluded by the occlusion element so that the machine may be adapted for different fruit height and types of fruit. For example, an orange typically has a larger diameter than a lime, and thus more of the cross-sectional area of the channel may need to be covered, in order to achieve a fruit height of 4 to 5 oranges compared to 4 to 5 limes. On the other hand, lime may be more sturdy so that a larger fruit height may be possible or desirable for limes than for oranges.

Alternatively, it may be beneficial to adapt the location of the occlusion, so that the amount of the cross-sectional area occluded remains the same. In this context, the one or more rotating brushes are configured so that each brush rotates about an axis at least substantially parallel to the first direction.

In this context a rotatable brush is preferably an object, with a plurality of bristles, spikes, hair, strands or wire positioned around the surface of the brush. A rotation brush may also be an element with a surface comprising one or more elongated ridges potentially separated by grooves extended along the ridges. The ridges may extend along the first direction or may extend also in a direction at an angle to the first direction.

The rotating brushes are preferably configured to come into contact with the fruit and therefore clean and/or polish the fruit by abrasive contact of the brush bristles, spikes, hair wire or ridges and the surface of the fruit. In this context, the rotational brushes will typically, even though this is not required, be able to rotate 360 degrees around the respective axis.

The axis of the brushes need not be exactly parallel to the first direction; thus, each axis may vary up to 20, 15, 10, 5, or 2 degrees to the first direction.

The bristles, spikes, hair wire or ridges of a brush may be the same in both material, length, etc, along the rotational axis of that brush, or it may vary around a circumference of that brush. Clearly bristles of an increasing length may increase an overall size of the brush and thereby the manner in which it engages the fruit. Thus, the engagement of the fruit may be varied in any desirable manner perpendicular to or along the first direction.

The rotational brushes may rotate in concert, or each rotational brush may rotate independently from the other brushes.

The rotational brushes may extend from the first end to the second end of the channel. Actually, the channel may be defined as or by the length of one of or all of the brushes.

The fruit enters the channel at the first end, which may also be referred to as an inlet. The fruit exits the channel at the second end which may also be referred to as an outlet. The first end, or inlet, may define a hole, opening or the like for receiving the fruit. It may receive the fruit from a chute, ramp, conveyor or the like. Additionally, the second end, or outlet, may define a hole, opening or the like, and deliver the clean fruit to a chute, ramp, conveyor or the like.

In one embodiment of the invention, the rotating brushes, optionally in addition to any additional support elements, form a hollow channel, where the rotation axes are rotated about a central axis. In preferred embodiments the central axis is at least substantially parallel to the first direction of the hollow channel. In other words, the rotating brushes form a circumference and the fruit pass through the formed channel.

As mentioned above, the circumferential shape of the hollow channel may be a circle, square, triangle, semi-circle, kite, pentagon, hexagon or the like.

The central axis may be located so that it passes through approximately the centre of the shape formed by the circumference of the rotating brushes. Thus, in other words, the rotating brushes not only rotate on their own axis, but the whole rotating brush is also rotated about the central axis. Thus, it may be that none of the rotating brushes share an axis of rotation with the central axis.

It may be the case that one of the rotating brushes shares an axis with the central axis, in this case the other rotating brushes would rotate about their own axes and the central axis.

Note that if rotating brushes are also rotating about a central axis, the axis along which the resultant force acts on the fruit, and thus the fruit height is measured along, may not be the vertical axis. The position of the resultant force axis may vary depending on the speed of the rotation of the brushes around the central axis.

Moreover, if the resultant force axis is not equal to the vertical axis, the occlusion element may be repositioned within the channel, so that the required height of fruit is maintained.

Note that in this embodiment, the rotating brushes may rotate 360 degrees about their own axes and 360 degrees about the central axis. The rotating brushes may rotate anti-clockwise round their own axes, and clockwise around the central axis or vice versa. In other words, the two rotations may be counter to each other. However, it may be the case that the two rotations are in the same direction.

In another embodiment of the invention the rotating brushes are rotatably attached to a fixing structure, where the fixing structure is rotated or rocked sequentially to either side around a central axis parallel to the first direction. Thus, the apparatus may further comprise a fixing structure. The fixing structure is configured such that rotating brushes are rotatably attached to the fixing structure and the fixing structure rotates about a central axis. The positions of attachment of the brushes to the fixing structure defines the shape of the channel. The fixing structure therefore may be a drum, frame, scaffold or the like. In this embodiment, the fixing structure may rock about the central axis back and forth. In other words, the fixing structure rotates, for example, 90° clockwise, then 90° anti-clockwise, and so forth. Note that the angle of rotation may be 10°, 20°, 30°, 40°, 50°, 60°, 70°, 80°, 100°, 120°, 140°, 150°, or the like.

The movement of the rotation axis round the central axis may be beneficial as it caters for movement of the fruit also not merely along the first direction but also at an angle thereto. This may allow increased contact between the brushes and the entire surface area of the fruit.

In this embodiment, the rotational brushes may also rotate counter or be in the same direction to the direction that the fixing structure is rotating at a given point in time. Thus, the direction of rotation of a rotating brush may reverse between the two extreme positions of the rocking movement. Alternatively, the brushes may rotate in one direction and not change direction with respect to the fixing structure.

In another embodiment the assembly further comprises a helically shaped element configured to rotate around a second axis at least substantially parallel to the first direction and provided at a predetermined distance from the rotating brushes. In this context a helically shaped structure may be defined as having a shape like the cylindrical part of a coil spring or machine screw. In other words, the helical structure may be a helical surface surrounding a central cylindrical shaft. The helical structure may have a similar shape to an Archimedes screw.

In this aspect, the helical structure may comprise a brush, where the bristles, spikes, hair or wire of the brush protrude out of a central portion and are arranged to form a helical surface.

The helical structure may comprise a centre which rotates about the second axis. Note that the second axis is substantially parallel to the first direction and may be located at a fixed distance from the rotating brushes. Thus, it may be that the second axis is located approximately at the centre of the cross-sectional area of the channel. The helical structure may be positioned so that it extends in the first direction. The helical structure may rotate counter to the rotating brushes, or it may rotate in the same direction.

It may be desired that the second axis and the helically shaped element are selected so that a distance, along the length of the channel, between outer portions of the helical structure and of the rotating brushes are at least substantially the same.

The helical structure has the benefit that the rotation of the helical structure may help to guide the fruit along the channel in the first direction, i.e., from inlet to outlet. If the helical structure also comprises a brush, there is the added benefit of increased contact between the surface area of the fruit and brushes which may result in better cleaning. The helical structure may also contribute to a larger contact force between rotational brush and the fruit resulting in more vigorous cleaning.

In this context the rotating brushes may rotate with any desired rotational speed. The speed may depend on the diameter of the brush and properties of the bristles. A rotational speed may be between 35rpm and 240 rpm, such as around 150 rpm.

Moreover, the rotating brushes may comprise brushes or tufts each comprising a plurality of bristles. Again, the properties of the brush and bristles will depend on the type of fruit and the fruit height, as this will also define the weight of fruit on the brush and thus bristles. The properties will also determine the engagement between the brush and the fruit. Stiffer bristles will perform a more forceful cleaning than softer bristles. Also, longer bristles are more bendable than shorter bristles. The force required to displace the distal end of a bristle a predetermined distance perpendicular to an initial direction of the bristle will depend on the length of the bristle. For the same amount of bristles of the same material and the same cross sectional shapes and dimensions, longer bristles will be able to support a lower weight, per area, than shorter bristles. Presently, the bristle length may be in the interval of 5-25mm, such as 10-20mm, such as approximately 18mm.

The bristles may be arranged in tufts or bundles each having a diameter of 2-20mm, such as 3-10mm or a cross sectional area corresponding thereto. A distance of 5-50mm, such as 10-30mm may exist between centres of adjacent bundles. The bundles may be positioned in rows along the rotational axis. Bundles of adjacent rows may be staggered to form a zig-zag pattern.

The desired bristle diameter may depend on the parameters of the bristle material. Preferably, PA6 is a preferred material. The bristle diameter or cross sectional area may be of approximately 0.15-2mm, such as 0.2-1mm, such as 0.3-0.8mm

Note that the inlet is located physically higher than the outlet, so that the first direction forms a downward angle to the horizontal. This has the benefit that the fruits are moved through the channel by gravitational force.

A second aspect of the invention relates to an apparatus according to claim 6.

Naturally, all considerations, embodiments and comments made in relation to the first aspect of the invention are equally relevant to this second aspect of the invention.

The occlusion element, the trough shaped channel, the first direction, the fruit height and the second end, the rotatable brushes, the fruit height are all as described above.

The first drive element may rotate the rotatable brushes around their respective axis.

Suitable drives elements may include Brushless AC, Brushless DC, Brushed AC, Brushed DC, actuators, engines or the like. Moreover, it may be beneficial for the drive element to be able to rotate the rotatable brushes at varying speeds as some types of citrus fruit may need higher speeds than others.

A single drive element may be configured to rotate all the rotatable brushes, or alternatively a plurality of drive elements may be used each drive element rotating a group of at least one rotating brushes. If more than one drive element is used, the drive elements may be configured such that the other surface of all the rotatable brushes rotate at the same speed.

The drive element may connect directly to the axes of the rotatable brushes or use a system such as a belt, or gear system to rotate the brushes.

The rotatable brushes may be attached to a fixing structure, where the fixing structure is configured to rotate sequentially to either side around a central axis parallel to the first direction.

The first end is positioned at a higher elevation than the second end.

### LEGENDS TO THE FIGURE

Fig. 1 shows an embodiment of the apparatus
Fig. 2 shows the cross section of the apparatus with a helical structure.
Fig 3. Shows an embodiment of the apparatus with a fruit height shown.
Fig 4. Shows an embodiment of the apparatus with an occlusion element.
Fig 5. Shows example embodiments for the occlusion element.

### DETAILED DISCLOSURE OF THE INVENTION

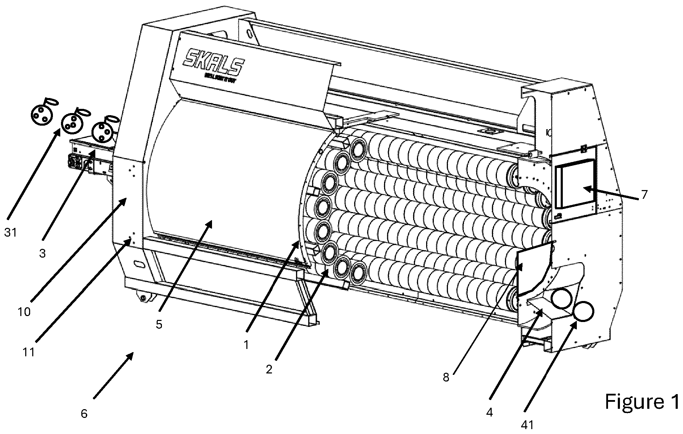

Fig 1. shows an example of a machine 1 related to this invention configured to polish fruits. It is envisaged that the machine will be of the type shown in figure 1, however the machine may vary in form without departing from the scope of the invention.

In figure 1, the machine comprises an inlet 3, where un-polished fruits 31 enter the rotating drum assembly 1, which is trough shaped, and an outlet 4 to which polished fruits 41 exit. The rotating drum assembly 1, is formed from, in part, a plurality of cylindrical brushes 2. The un-polished fruits 31 enter the rotating drum assembly 1 via the inlet 3, the rotating drum assembly 1 and therefore the plurality of cylindrical brushes 2 are rotated such that the fruits are in contact with the plurality of cylindrical brushes 2 and are thus polished. During operation the rotating drum assembly 1 may be sealed such that water and dirt does not escape from the curved side 5 of the machine 6. The machine 6 also comprises a control system 7 configured to control the machine 1 to carry out the polishing of the fruits.

Un-polished fruit 31 such as oranges, lemons, limes, grapefruit, or the like enter the machine at the inlet 3. Therefore, the inlet 3 may be an opening, hole, shoot, ramp, hopper or the like. The inlet 3 may be configured to be attached to a conveyor belt system. The inlet 3 may be configured so that a basket, net, storage container or the like may be attached to it in order to hold un-polished fruit 31 waiting to enter the machine 6. Therefore the inlet speed may be controlled by gravitational force, or the speed of the conveyor.

The polished fruits 41 may exit the machine from the outlet 4. Therefore, the outlet 4 of the machine may be a hole, opening, shoot, ramp or the like. The outlet 4 may be configured to attach to or deliver to a conveyer belt. The outlet 4 may be configured so that a basket, net, storage container or the like may be attached to it to hold polished fruit 41 exiting the machine 6. The outlet 4 is located vertically lower than the inlet 3 so that there is a vertical gradient along the length of the machine 6.

The vertically lower positioning of the outlet 4 with respect to the inlet 3 is advantageous as it allows the fruit to travel through the rotating drum assembly 1 without need for additional assistance such as an internal conveyor or such mechanism. Thus, the length or direction of the rotating drum assembly 1 is at a downward angle with respect to the horizontal. The downward angle may relate to the desired throughput of the fruit. The downward angle may also relate to the amount of polishing undergone by the fruit as it moves through the machine 6, i.e., if the fruit moves faster through the machine 6 it comes into contact with fewer brushes 2 and thus is cleaned less thoroughly.

The angle of the rotating drum assembly 1 is between 0.5-2 degrees to the horizontal, typically 1.4 degrees for citrus fruits.

The rotating drum assembly further comprises an occlusion element 8. The occlusion element 8 restricts the exit of the fruit from the exit 4 and this may cause the fruit to pile into layers inside the assembly 1. This may be advantageous as fruit on the upper layers may provide a force onto the fruit in the bottom layers, thus pushing the bottom layer fruit toward the brushes 2 for a better cleaning performance.

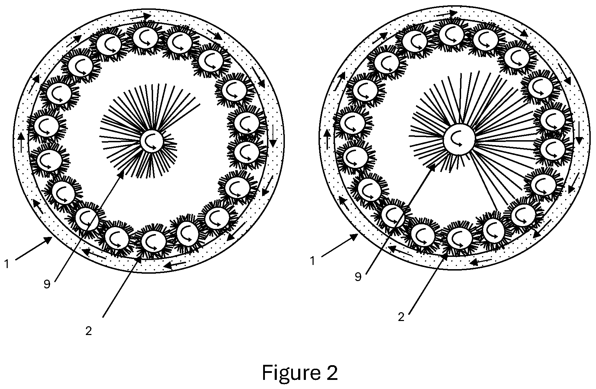

The rotating drum assembly 1 is configured to rotate about an axis (perpendicular to the plane of figure 2), wherein the axis may be a line directly between the inlet 3 and the outlet 4. In one example, the rotating drum assembly 1 may be attached to a variable speed drive 10, the drive then attached to the chassis of the machine 6. The variable speed drive mechanism may also utilise a belt or the like. Suitable variable speed drives may include Brushless AC, Brushless DC, Brushed AC, Brushed DC or the like. It is advantageous to be able to vary the rotational speed of the rotating drum assembly 1 as different rotational speeds may be required for, for example, different types of fruits, the degree of dirt on the fruits, desired quality/cleansing of the end product, required throughout time or the like. The rotating drum assembly 1 may also be configured such that multiple layer of citrus fruit may travel through the rotating drum assembly 1 at any such time. Note that multiple layers of citrus fruit may have the advantage of providing additional force for the fruit coming into contact with any of the brushes 2 and therefore being cleaned more vigorously.

Typically, for citrus fruits, the rotational speed of the drum may be between 0.75 r/min - 6.6 r/min

The internal diameter of the drum may be e.g. 640mm - 990mm.

Throughout the cleaning process the curved side face 5 of the rotating drum assembly 1 may be configured to remain sealed, to prevent water, dirt or other cleaning fluid from leaving the machine. However, the rotating drum assembly 1 may also comprise a door, hatch, or the like on the curve face of the rotating drum assembly so that it can be opened to clean and/or provide maintenance to the machine. Moreover, the rotating drum assembly 1 may comprise a filter, grate, pipe mechanism, pump mechanism or the like that allows dirt, dirty water, or dirty washing fluid to be removed during the cleaning process in a controlled manner. Clearly the two ends of the rotational drum assembly 1 where the inlet 3 and outlet 4 are located respectively are open so that fruit may enter or exit the rotation drum assembly 1.

The rotating drum assembly 1 may also comprise a fluid application/adding mechanism whereby fluid such as water, cleaning fluid, polishing fluid or the like may enter the internal part of the rotating drum assembly, thus allowing the fluid to mix with the citrus fruit. The fluid application mechanism may be a tap, pipe, spout, pump or the like.

The type of fluid used for fruit polishing may be water, although in some instances soap, detergent or the like may also be added. The water may also contain any desired for e.g. adjusting a pH of the fluid if desired.

The amount of fluid applied would normally depend on the degree of dirt on the fruit but may e.g. be between 450lh/h and 1500l/h, such as around 900l/h.

The rotating drum assembly 1 comprises a plurality of cylindrical brushes 2 that may be positioned within the interior of the rotating drum assembly 1 as shown in figure 1. The cylindrical brushes 2 may have the same length as the drum 1, i.e., so that one brush 2 spans the whole length of the drum 1. In another example, the length of a cylindrical brush 2 may be less than the length of the drum 1 so that multiple cylindrical brushes 2 may be positioned end to end to span the length of the drum 1. The cylindrical brushes 2 are positioned around the interior circumference of the drum 1 as shown in figure 1 so that there is room between the brushes 2 and the centre of the drum 1 for the citrus fruits. Naturally, the brushes may also be non-cylindrical if desired.

In one example, for citrus fruits the diameter of the brushes may be 0.2-0.5mm, such as 0.3-0.45mm.

The number of brushes within the drum circumference for polishing of citrus fruits may be between 14 to 20 rotating brushes, such as 16 brushes.

The material of the brush bristle, for citrus fruits, may be PA6 The length of the bristles may be approximately 18mm. The diameter of the individual bristle may be between 0.3 - 0.5m.

The bristles may be arranged in bundles, each bundle measuring approximately 5mm in diameter.

These brushes 2 are configured to rotate in a direction counter to the rotation of the rotating drum as shown in Figure 2. The cylindrical brushes 2 rotate about an axis that is at least substantially parallel to the axis of the rotating drum assembly 1. Thus, the brushes 2 are rotated by a second variable speed drive 11 that is separate from the variable speed drive 10 connected to the drum 1. Clearly, given the brush speed drive and the drum speed drive are separate, the brushes 2 may rotate at a speed different to the rotational speed of the drum 1. The faster the speed of the brushes 2 the more vigorous the polishing of the citrus fruit. Additionally, the drum 1 may rotate whilst the brushes 2 are stationary, or vice versa.

Typically, for citrus fruit, the rotational speed of the brushes may be between 35r/min to 240r/min, typically 150r/min.

The plurality of brushes 2 may share the same variable speed drive 11, or alternatively each brush 2 be connected to a separate variable speed drive, so that neighbouring brushes 2 may rotate at different speeds from each other. The brushes 2 may be grouped, and each group of brushes 2 may share a variable speed drive. For example, it may be desirable for the brushes 2 close to inlet 3 to rotate faster to provide a more vigorous cleaning to the inlet 3 fruit which may be covered in dirt, leaves or the like. Once the dirt/leaves etc are removed, the brushes 2 closer to the outlet 4 may be utilised to provide a gentler cleaning and thus rotate slower.

However, in this context, the outer surfaces of the brushes may move with the same velocity. The machine 6 further comprises a controller 7. The controller 7 may be configured to control the speed of rotation of the brushes 2 and the speed of rotation of the drum 1. If the inlet 3 and/or outlet 4 comprises a conveyor, the controller may also control the inlet/outlet conveyor. If the rotational drum assembly 1 comprises a fluid addition mechanism the controller may also control the amount of fluid added to the rotation drum assembly 1. The control may be a PLC, microcontroller, Arduino, Raspberry Pi or the like.

The machine 6 may further comprise a helical brush 9 positioned along the central axis of the rotational drum assembly 1 and is configured to rotate about the central axis, as shown in Figure 2. Alternatively, the helical brush 9 may be positioned along, and rotate about an axis that is at least substantially parallel to the central axis. The helical brush 9 may act like an Archimedes screw and move the citrus fruit along the length of the rotational drum assembly 1, additionally cleaning the citrus fruit as it is moved. The helical brush 9 may be included in the machine 1 with or without the cylindrical brushes 2 arranged around the circumference of the machine. The helical brush 9 is configured such that it rotates counter to the rotation of the rotational drum assembly 1. The helical brush 9 may be attached to a third variable speed drive (not illustrated) allowing the rotational speed of the helical brush 9 to be different to that of the rotational drum assembly 1 and also the rotational speed of the cylindrical brushes 2.

The brushes of the helical brush may extend to the rotating brushes or may leave a distance there between to provide less force on the fruits.

Further, in another example, a non-brushed helical structure, i.e., without brushes on the helical structure may be used wherein to move the fruit through the rotational drum assembly 1 and ensure the fruit comes into contact with the cylindrical brushes 2, the cylindrical brushes 2 being those arranged on the circumference of the rotational drum assembly 1. In this instance, the helical structure itself does not clean the citrus fruit. The helical structure may also act like an Archimedes screw and guide the fruit through the rotational drum assembly.

In a first example method of operation the rotating drum assembly 1 does not fully rotate (i.e., it does not rotate 360°). Instead, the rotating drum assembly rocks about the axis back and forth (the axis being along the length of the rotating drum assembly). In other words, the rotational drum assembly 1 rotates, for example, 90° clockwise, then 90° anti-clockwise, and so forth. Note that the angle of rotation may be 10°, 20°, 30°, 40°, 50°, 60°, 70°, 80°, 100°, 120°, 140°, 150°, or the like. In this first method example, the brushes 2 may also rotate, counter to the direction that the rotational drum assembly 1 is rotating at a given point in time. Alternatively, the brushes 2 may rotate in one direction and not change direction with respect to the rotational drum assembly 1. In this case, the brushes 2 may rotate in the same direction as the rotational drum assembly 1 for some of the cycle.

Note that, if the machine is to operate using this first method, a fully cylindrical shaped drum may not be necessary, i.e., the rotational drum assembly 1 may be a half cylindrical shaped drum. Alternatively, the rotational drum assembly 1 could be a full cylinder shape with only the bottom half covered with brushes 2. However, the machine 6 may comprise a fully cylindrical shaped rotational drum assembly 1, where the cylindrical brushes 2 cover the entire circumference of the drum 1, but only the cylindrical brushes 2 on the bottom half are configured to rotate.

Alternatively, the rotational drum assembly 1 may also remain stationary whilst the brushes 2 rotate.

Thus, in the first method, the fruit enters the rotational drum assembly 1 via the inlet 3, and travels along the internal length of the rotational drum assembly 1 due to gravity. As the fruit moves through the drum 1, the fruit is in contact with the cylindrical brushes 2 and is cleaned. The fruit exits the rotational drum assembly 1 via the outlet 4. Note that the occlude 8 will ensure that more than one layer of citrus fruit is in the rotating drum assembly 1 at any given time.

In a second example method of operation both the rotational drum assembly 1 and the brushes rotate 2. The rotation of the brushes 2 is counter to the rotation of the rotational drum assembly 1, i.e., if the drum 1 rotates clockwise, the brushes 2 rotate counterclockwise. The brushes 2 may rotate at the same speed as the rotational drum 1, or they may rotate at a different speed as discussed above.

Thus, as with the first method, in the second method the fruit also enters the rotational drum assembly 1 via the inlet 3, and travels along the internal length of the rotational drum assembly 1 due to gravity. As the fruit moves through the rotational drum assembly 1, the fruit is in contact with the cylindrical brushes 2 and is cleaned. The fruit exits the rotational drum assembly 1 via the outlet 4. Note again the function of the occlude.

In a third example method, the rotational drum assembly 1 may comprise the helical brush 9 as described above. The rotational drum assembly 1 rotates in one direction and the helical brush rotates 9 about the same axis but in a counter direction. In this method, if present, the cylindrical brushes 2 may rotate in the same direction to the helical brush 8, or counter to the helical brush 9 (and therefore in the same direction as the rotational drum assembly.) Alternatively, the cylindrical brushes 2 may be present but not rotate, i.e., remain stationary. In this third method example, a non-brushed helical structure could be used in the same manner as the helical brush 9.

In this third method, the fruit enters the rotational drum assembly 1 via the inlet 3 and may be guided along the length of the drum 1 via the helical brush 9. As the fruit moves through the rotational drum assembly 1, the fruit may be in contact with the cylindrical brushes 2 and the helical brush 9 and is cleaned. The fruit exits the rotational drum assembly 1 via the outlet 4. Again, the occlude will generate the desired fruit height.

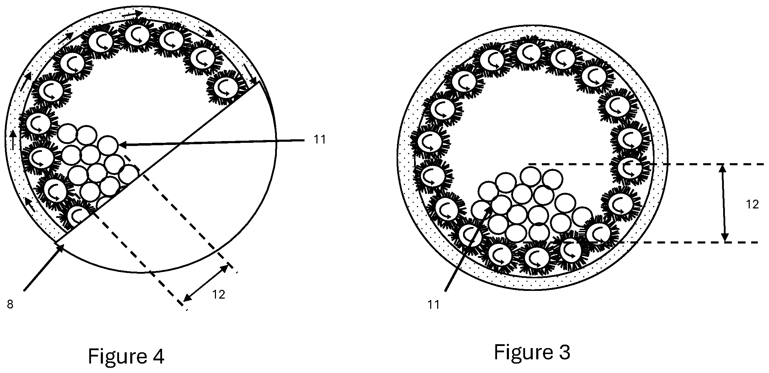

Figure 3 shows the fruit height dimension 12. The occlusion element (8 - not shown in Figure 3) may cause the fruit 11 to pile up and thus form layers. The fruit height 12 is the number of fruits 11 in a layer, measured in the direction of the resultant force and with dimension of the mean diameter of the fruit. In the case of the embodiment shown in Figure 3, the drum assembly 1 is stationary, and thus the fruit 11 has piled at the bottom of the cross section of the rotating drum assembly 1. Thus, the fruit height 12 is measured along the vertical axis, as this is also the axis of the resultant force.

Figure 4 shows an embodiment of the invention where the drum assembly 1 is rotating in the clockwise direction. This rotation causes the fruit 11 to pile at the bottom of the machine, at an angle to the vertical axis as shown. Thus, the fruit height 12 is also measured at an angle to the vertical axis. Also shown in this figure is an example of an occlusion element 8.

It is noted that even when the drum assembly is at standstill, the rotation of the brushes will make the fruit in the drum assembly move and shift between layers so that all fruit will eventually be at the bottom layer for optimal cleaning.

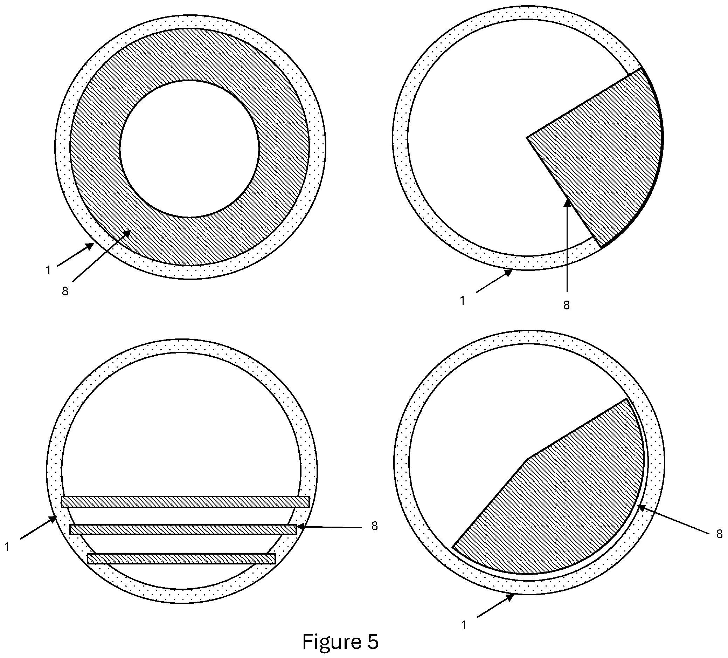

Figure 5 shows example configurations for the occlusion element 8. Note the occlusion element 8 is not limited to these embodiments, the figure serves the purpose to give examples.

## Claims

1. A method of cleaning fruits the method comprising:
- providing an apparatus comprising an occlusion element and a trough-shaped channel extending along a first direction, the channel having a first and a second end, the channel comprising one or more rotating brushes, each rotating brush rotating around a rotation axis at least substantially parallel to the first direction,
- adding the fruits at the first end of the channel,
- transporting the fruits from the first end of the channel to the second end of the channel whilst the brush(es) rotate and the occlusion element maintains in the channel a mean fruit height of between 0.5 and 10.5 times a mean diameter of the fruits, and
- receiving cleaned fruits from the second end of the channel.

2. A method according to claim 1, wherein the rotating brushes form a hollow channel, where the rotation axes are rotated about a central axis, being at least substantially parallel to the first direction, of the hollow channel.

3. A method according to claim 1 or 2, wherein the rotating brushes are attached to a fixing structure, where the fixing structure is rotated sequentially to either side around a central axis parallel to the first direction.

4. A method according to any of the preceding claims, wherein the rotating brushes rotate with an RPM of 35 to 240 r/min.

5. A method according to any of the preceding claims, wherein the rotating brushes comprise bristles of between 0.15 to 0.7mm in diameter, with a length of 10-25mm and where the bristles are arranged in bundles measuring 2-20mm in diameter.

6. A method according to any of the preceding claims, where the fruits move from the first end to the second end due to gravity.

7. An apparatus for cleaning fruit, the apparatus comprising
a. an occlusion element
b. a trough-shaped channel extending along a first direction, the channel having a first and a second end,
c. the channel comprising one or more rotatable brushes, each brush configured to rotate around a rotation axis at least substantially parallel to the first direction,
d. a first drive element configured to rotate the rotatable brushes,
wherein the occlusion element is configured to maintain in the channel a mean fruit height of 0.5-4.5 times a mean diameter of the fruit during rotation of the brushes.

8. An apparatus according to claim 7, wherein the rotatable brushes form a hollow channel, and a second drive element is configured to rotate the rotation axes about a central axis, the central axis being at least substantially parallel to the first direction of the hollow channel.

9. An apparatus according to claim 7 or 8, wherein the rotatable brushes are attached to a fixing structure, where the fixing structure is configured to rotate sequentially to either side around a central axis parallel to the first direction.

10. An apparatus according to any of claims 7-9, wherein the first end is positioned at a higher elevation than the second end.

## Amended claims

### Amended claims in accordance with Rule 137(2) EPC.

1. A method of cleaning citrus fruits the method comprising:
- providing an apparatus comprising an occlusion element and a trough-shaped channel extending along a first direction, the channel angled at 0.5-2 degrees to the horizontal, the channel having a first and a second end, the channel comprising one or more rotating brushes, each rotating brush rotating around a rotation axis at least substantially parallel to the first direction,
- adding the citrus fruits at the first end of the channel,
- transporting the citrus fruits from the first end of the channel to the second end of the channel due to gravity whilst the brush(es) rotate and the occlusion element maintains in the channel a mean citrus fruit height of 2 or more times a mean diameter of the citrus fruits, and
- receiving cleaned citrus fruits from the second end of the channel.

2. A method according to claim 1, wherein the rotating brushes form a hollow channel, where the rotation axes are rotated about a central axis, being at least substantially parallel to the first direction, of the hollow channel.

3. A method according to claim 1 or 2, wherein the rotating brushes are attached to a fixing structure, where the fixing structure is rotated sequentially to either side around a central axis parallel to the first direction.

4. A method according to any of the preceding claims, wherein the rotating brushes rotate with an RPM of 35 to 240 r/min.

5. A method according to any of the preceding claims, wherein the rotating brushes comprise bristles of between 0.15 to 0.7mm in diameter, with a length of 10-25mm and where the bristles are arranged in bundles measuring 2-20mm in diameter.

6. An apparatus for cleaning citrus fruit, the apparatus comprising
a. an occlusion element
b. a trough-shaped channel extending along a first direction, the channel angled at 0.5-2 degrees to the horizontal, the channel having a first and a second end, wherein the first end is positioned at a higher elevation than the second end,
c. the channel comprising one or more rotatable brushes, each brush configured to rotate around a rotation axis at least substantially parallel to the first direction,
d. a first drive element configured to rotate the rotatable brushes,
wherein the occlusion element is configured to maintain in the channel a mean citrus fruit height of 2 or more times a mean diameter of the citrus fruit during rotation of the brushes.

7. An apparatus according to claim 6, wherein the rotatable brushes form a hollow channel, and a second drive element is configured to rotate the rotation axes about a central axis, the central axis being at least substantially parallel to the first direction of the hollow channel.

8. An apparatus according to claim 6 or 7, wherein the rotatable brushes are attached to a fixing structure, where the fixing structure is configured to rotate sequentially to either side around a central axis parallel to the first direction.

9. An apparatus according to any of claims 6-8 wherein the mean citrus fruit height is between 2.5 - 10.5 times the mean diameter of the citrus fruit.

10. A method according to any of claims 1 - 5 wherein the mean citrus fruit height is between 2.5 - 10.5 times the mean diameter of the citrus fruit.
